# EUROPÄISCHE PATENTANMELDUNG

(11) **EP 0 579 936 A1**
(43) Veröffentlichungstag der Anmeldung: **26.01.1994**
(21) Anmeldenummer: 93108727.4
(22) Anmeldetag: 29.05.1993
(51) Int. Cl.: G01N 29/22, G01N 29/26

(54) **Ultraschall- Prüfvorrichtung für längliche Prüfstücke mit über der Länge konstantem Querschnitt, insbesondere Rohre und Stangen**

(30) Priorität: 24.07.1992 DE 4224538
(71) Anmelder: KRAUTKRÄMER GmbH & Co., D-50354 Hürth (DE)
(72) Erfinder: Patzke, Ottokar, W-5042 Erftstadt (DE); Prause, Reinhard, W-5205 Sankt Augustin 1 (DE); Karbach, Bernhard, W-5042 Erftstadt-Friesheim (DE)
(74) Vertreter: Bauer, Wulf, Dr.

(57) **Zusammenfassung**

Bei der Ultraschall-Prüfvorrichtung für längliche Prüfstücke (20) mit über der Länge konstantem Querschnitt, insbesondere Rohre und Stangen, die entlang einer Prüflinie (24) in ihrer Längsrichtung transportiert werden und dabei eine Prüfmaschine (28) durchlaufen, die auf der Prüflinie (24) angeordnet ist, ist eine zweite Prüfmaschine (34) vorgesehen. Die beiden Prüfmaschinen (28, 34) sind auf einem Drehgestell (30) im Abstand voneinander, parallel zueinander und um 180° verdreht gegeneinander angeordnet, das um mindestens 180° um eine Drehachse (38) verdrehbar ist, die rechtwinklig zur Prüflinie (24) und im Abstand von dieser verläuft, so daß in einer ersten Drehposition des Drehgestells (30) die eine Prüfmaschine (28) in der Prüflinie (24) liegt und die andere Prüfmaschine (34) umgerüstet werden kann und in der zweiten Drehposition die andere Prüfmaschine (34) in der Prüflinie (24) liegt und die erste Prüfmaschine (28) umgerüstet werden kann.

## Beschreibung

Die Erfindung bezieht sich auf eine Ultraschall-Prüfvorrichtung für längliche Prüfstücke mit über der Länge konstantem Querschnitt, insbesondere Rohre und Stangen, die entlang einer Prüflinie in ihrer Längsrichtung transportiert werden und dabei eine Prüfmaschine durchlaufen, die auf der Prüflinie angeordnet ist.

Bei Prüfstücken mit rundem Außenquerschnitt oder mit regelmäßigem Polygonprofil werden als Prüfmaschinen sogenannte Ganzkörper-Prüfanlagen eingesetzt, die Prüfstücke werden entlang einer schraubenlinienförmigen Bahn mit Ultraschall abgetastet. Die Prüfstücke werden dabei entlang der Prüflinie gegenüber der Prüfmaschine bewegt. Entweder werden die Prüfstücke zusätzlich selbst während der Prüfung um ihre Längsachse gedreht und bleibt die Prüfmaschine fest, oder die Prüfmaschine hat einen Rotor, der sich um die Achse des Prüfstücks, also die Prüflinie, dreht. Derartige Prüfanlagen sind beispielsweise im DE-Buch J. und H. Krautkrämer "Werkstoffprüfung mit Ultraschall", 4. Aufl., Seiten 442 bis 461 beschrieben.

Als Prüfstücke kommen aber auch andere Längsprofile in betracht, beispielsweise Flossenrohre, Eisenbahnschienen, Brammen, Sonderprofile oder dergleichen. Bei diesen Prüfstücken ist eine schraubenlinienförmige Abtastung im allgemeinen nicht möglich. Die Ultraschallprüfung erfolgt dann durch mehrere, ortsfest angeordnete Prüfköpfe der Prüfmaschine. Die Prüfköpfe sind so über die Außenkontur des Profils angeordnet, daß die notwendigen und vom Anwender gewünschten Prüfungen durchgeführt werden können.

Ultraschall-Prüfvorrichtungen der eingangs genannten Art werden in der Regel beim Hersteller der Prüfstücke eingesetzt, im Anschluß an die Produktion. Die Ultraschall-Prüfung soll zwar einerseits eine möglichst gute Aussage über die Qualität der einzelnen Prüfstücke geben, andererseits aber die Produktion möglichst nicht verzögern oder gar erschweren.

Bei der Produktion wird typischerweise zunächst eine gewisse Tonage von Prüfstücken mit einer vorgegebenen Querschnittsform erstellt, danach wird eine zweite Profilform gefahren usw.. An einen derartigen Profilwechsel muß sich eine Ultraschall-Prüfvorrichtung relativ rasch anpassen lassen, jedenfalls so rasch, daß durch die Ultraschall-Prüfung die Produktion der Profilteile nicht verzögert wird. Demgemäß hat man versucht, die Ultraschall-Prüfvorrichtungen rasch umrüstbar von einer Profilform auf eine andere Profilform zu machen. Diese Lösungen halten jedoch mit der modernen Entwicklung der Produktion nicht stand.

Hiervon ausgehend ist es Aufgabe der Erfindung, eine Ultraschall-Prüfvorrichtung der eingangs genannten Art dahingehend weiterzubilden, daß eine möglichst rasche Umstellung von einem Profiltyp auf einen anderen möglich ist, ohne daß die Produktion merklich durch die Umrüstung der Ultraschall-Prüfvorrichtung beeinflußt wird.

Ausgehend von der Ultraschall-Prüfvorrichtung der eingangs genannten wird diese Aufgabe dadurch gelöst, daß eine zweite Prüfmaschine vorgesehen ist, daß die beiden Prüfmaschinen auf einem Drehgestell im Abstand voneinander, parallel zueinander und um 180° verdreht gegeneinander angeordnet sind, das um mindestens 180° um eine Drehachse verdrehbar ist, die rechtwinklig zur Prüflinie und im Abstand von dieser verläuft, so daß in einer ersten Drehposition des Drehgestells die eine Prüfmaschine in der Prüflinie liegt und die andere Prüfmaschine umgerüstet werden kann und in der zweiten Drehposition die andere Prüfmaschine in der Prüflinie liegt und die erste Prüfmaschine umgerüstet werden kann.

Die Erfindung schlägt somit vor, zwei eigenständige, unabhängig voneinander einsetzbare Prüfmaschinen vorzusehen, die gemeinsam auf einem Drehgestell angeordnet sind. Beim praktischen Betrieb befindet sich eine Prüfmaschine immer auf der Prüflinie, also in der Prüfposition, während sich die andere Prüfmaschine in der Umrüstposition befindet. Diese andere Prüfmaschine kann gewartet, eingestellt oder umgerüstet werden, während die erste Prüfmaschine eine erste Charge von Prüfstücken mit einer Profilform prüft. Bei Chargenwechsel ist die andere Prüfmaschine bereits auf den neuen Profiltyp eingestellt und kann, wenn der neue Profiltyp zur Prüfung herangefördert wird, durch einfache Drehung des Drehgestells um 180° in die Prüflinie eingeschwenkt werden. Die Umstellung der Ultraschall-Prüfvorrichtung zwischen zwei Profiltypen ist daher in einer äußerst kurzen Zeit zu erledigen. Da die beiden Prüfmaschinen 180° verdreht auf dem Drehgestell angeordnet sind, bleibt die Durchlaufrichtung der Prüfstücke und die Position der jeweiligen Drehmaschinen in der Umrüstposition immer gleich. Dies hat den Vorteil, daß nur eine Einstellvorrichtung, vorzugsweise ein Manipulator für Eichnormale, vorgesehen werden muß.

Durch den Drehteller verlängert sich die Prüfstrecke in Durchlaufrichtung nur unwesentlich. Es sind keine zusätzlichen Treib- und Führungsstationen für die Prüfstücke erforderlich.

Der Einricht- und Umrüstort ist immer dergleiche für diejenige Prüfmaschine, die sich außerhalb der Prüflinie befindet. Es kann mit demgleichen Einstellhilfsmitteln gearbeitet werden, z. B. einem Manupulator entsprechend der DE 40 40 870 A1, einer Ultraschall-Hilfselektronik zum Einrichten der Mechanik.

Als sehr vorteilhaft hat es sich erwiesen, den Außenkreisdurchmesser des Drehgestells möglichst klein auszubilden. Demgemäß sind auf dem Drehgestell vorzugsweise nur die notwendigen Prüfmechaniken der beiden Ultraschall-Prüfmaschinen angeordnet, während sich die eine gemeinsame oder die für beide Prüfmechaniken getrennte Elektronik außerhalb des Drehgestells befindet. Darüberhinaus erfolgt die konstruktive Auslegung der Prüfmechaniken so, daß der Durchmesser des Drehgestells klein bleiben kann, also werden die Antriebsmotoren unter oder über der Prüfmechanik angeordnet und werden nicht wesentliche Maschinenkomponenten, wie beispielsweise Wasserleitungen und Ventile über der Mechanik angeordnet.

Als sehr vorteilhaft hat es sich erwiesen, die Prüfmechaniken mit dem Drehgestell jeweils über eine Querführung verschiebbar zu verbinden. Diese Querführung gestattet es, jede Prüfmechanik quer zur Prüflinie und quer zur Drehachse zwischen einer eingezogenen Position und einer ausgezogenen Position, in der die Prüfmechanik in der Prüflinie liegt, zu verschieben. Dadurch kann die erfindungsgemäße Ultraschall-Prüfvorrichtung auch dort eingesetzt werden, wo für das Drehgestell zuwenig Platz ist. Eine Drehung des Drehgestells erfolgt nur, wenn die beiden Querführungen eingezogen sind.

Als vorteilhaft hat es sich erwiesen, die beiden Prüfmechaniken höhenverstellbar auf dem Drehgestell anzuordnen. Weiterhin ist es in einer Alternative vorteilhaft, das Drehgestell selbst höhenverstellbar auszubilden. Dadurch können unterschiedliche Querschnittsabmessungen, insbesondere Rohrdurchmesser geprüft werden.

Die beiden Prüfmaschinen können, müssen aber nicht notwendigerweise baugleich sein. Es ist möglich, zwei unterschiedliche Prüfmaschinen vorzusehen, beispielsweise eine Prüfmaschine für kleinere Rohrdurchmesser und eine Prüfmaschine für größere Rohrdurchmesser.

Die erfindungsgemäße Ultraschall-Prüfvorrichtung hat den Vorteil, daß für die Umrüstung und Einjustierung einer Prüfmaschine auf eine neue Prüfaufgabe normalerweise ausreichend Zeit zur Verfügung steht, so daß die Umrüstung und Einjustierung ohne Zeitdruck aus der Produktion sorgfältig erfolgen und überprüft werden kann, bevor die Prüfung beginnt.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine Draufsicht auf eine Ultraschall-Prüfvorrichtung nach der Erfindung,
- Fig. 2: eine Draufsicht entsprechend Fig. 1 auf das Drehgestell in vergrößerter Darstellung und
- Fig. 3: eine Seitenansicht der Anordnung gemäß den Figuren 1 und 2.

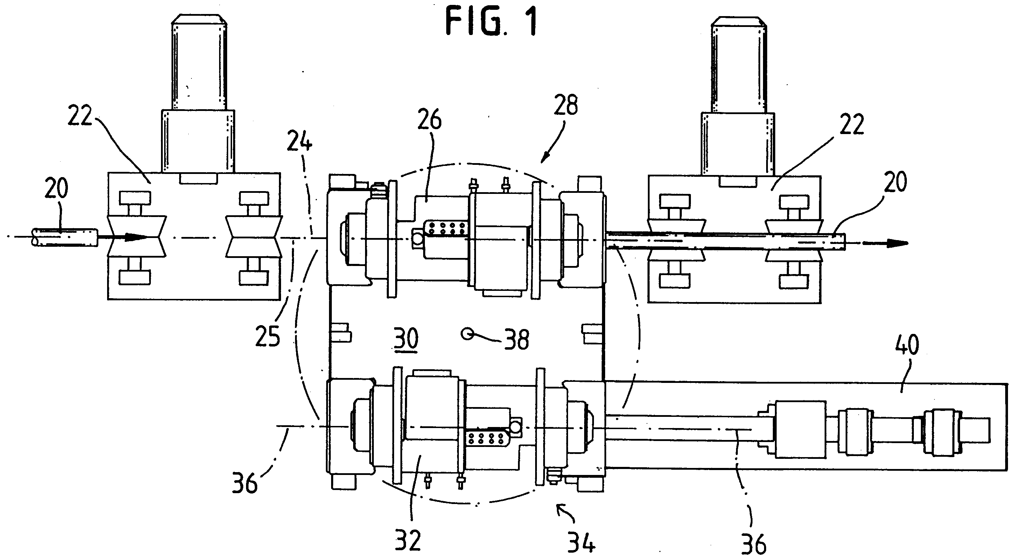

In der dargestellten Ultraschall-Prüfvorrichtung werden Prüfstücke 20 durch Rollgänge 22 entlang einer Prüflinie 24 gefördert und geleitet. Bei Rohren und runden Stangen fällt die Prüflinie 24 zusammen mit der Achse des Rohrs bzw. der Stange. Die Prüfstücke 20 werden, wie insbesondere Fig. 1 zeigt, in ihrer Längsrichtung transportiert.

Auf der Prüflinie 24 befindet sich die Prüfmechanik 26 einer ersten Prüfmaschine 28. Mit dieser werden die Prüfstücke 20 ultraschallmäßig überprüft, die Überprüfung erfolgt in bekannter Weise, so daß auf sie hier nicht näher eingegangen werden muß.

Die erste Prüfmaschine 28 ist auf einem Drehgestell 30 angeordnet, auf dem sich auch noch die Prüfmechanik 32 einer zweiten Prüfmaschine 34 befindet. Im gezeigten Ausführungsbeispiel sind beide Prüfmechaniken 26, 32 baugleich, dies muß aber nicht notwendigerweise der Fall sein. Im gezeigten Ausführungsbeispiel handelt es sich bei den Prüfmechaniken 26, 32 weiterhin um sogenannte Rotationsprüfmaschinen, auch dies ist nicht einschränkend zu verstehen, mindestens eine Prüfmaschine kann auch in anderer Form ausgebildet sein, beispielsweise als Ganzkörper-Prüfanlage mit Pfützentechnik als Ankopplungstechnik, wie sie beispielsweise in der DE 38 37 144 A1 beschrieben ist.

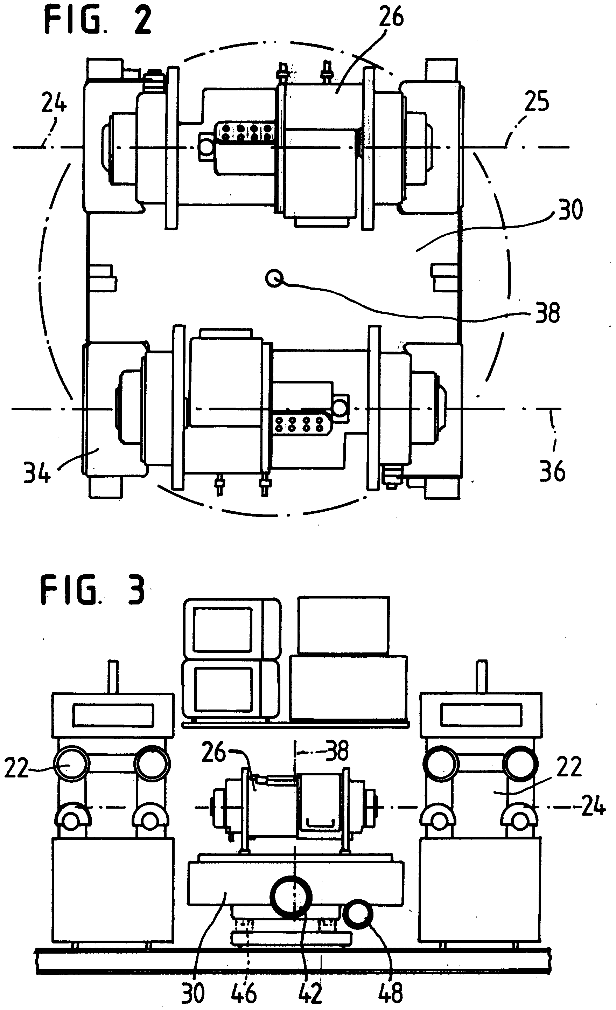

Wie insbesondere Fig. 2 zeigt, sind die beiden Prüfmechaniken 26, 32 so zueinander angeordnet, daß ihre Maschinenprüflinien 25, 36 parallel zueinander verlaufen. Die Maschinenprüflinie 25 der ersten Prüfmaschine 28, die sich im Prüfbetrieb befindet, fällt notwendigerweise zusammen mit der Prüflinie 24. Die Maschinenprüflinie 36 ist die Prüflinie, auf der die zweite Prüfmaschine 34 in der Position gemäß Fig. 1 und 2 eine Ultraschall-Prüfung durchführen könnte. Darüberhinaus sind die beiden Prüfmechaniken 26, 32 um 180° versetzt angeordnet. Schließlich sind sie beide in gleicher Entfernung von einer Drehachse 38 des Drehgestells 30 angeordnet, konkret ausgesprochen sind ihre Prüflinien 24, 36 in gleichem Abstand von dieser Drehachse 38. Dieser Abstand ist so klein wie möglich gewählt, um den Außendurchmesser des Drehkreises der Gesamtanordnung so gering wie möglich zu halten. Aus diesem Grunde sind auch alle mechanischen Vorrichtungen, die nicht notwendigerweise in der Prüflinie 24 liegen müssen, oberhalb (vorzugsweise) oder auch unterhalb der eigentlichen Prüfmechanik 26, 32 angeordnet, sofern sie unbedingt notwendig mit auf dem Drehgestell 30 montiert sein müssen. Alle mechanischen Teile, die dort nicht untergebracht sein müssen, sind ortsfest installiert. Insbesondere ist die aus Fig. 3 ersichtliche Elektronik ortsfest und außerhalb des Drehgestells 30 angeordnet.

Wie Fig. 1 zeigt, befindet sich auf der Maschinenprüflinie 36 der zweiten Prüfmaschine 34, die sich in der Umrüstposition befindet, ein Manipulator 40. Mit ihm erfolgt die Einstellung der Prüfmechanik 32 dieser zweiten Prüfmaschine 34. Ein Manipulator muß hier nicht im einzelnen beschrieben werden, verwiesen wird auf die DE 40 40 870 A1 und die DE 40 21 477 A1, die sich auf Teststückmanipulatoren beziehen und deren Offenbarungsgehalt vollständig zum Offenbarungsgehalt der vorliegenden Anmeldung gehört.

Vorzugsweise hat das Drehgestell 30 eine unterhalb der Prüfmechaniken 26, 32 angeordnete Wanne oder ist selbst als Wanne ausgebildet. Diese Wanne fängt das Ankopplungswasser auf. Von dieser Wanne wird das Ankopplungswasser wieder hochgepumpt und nach einer gegebenenfalls zwischengeschalteten Reinigung wieder für die Ankopplung verwendet.

Das Drehgestell 30 ist mittels einer handbetätigten Stellvorrichtung, von der in Figur 3 ein Stellrad 42 zu erkennen ist, höhenverstellbar. Die Höhenverstellung erfolgt gegenüber einer Basis 44, auf der auch die Rollgänge 22 angeordnet sind. Wie in Fig. 3 gestrichelt eingezeichnet ist, ist eine Querführung 46 bestehend aus zwei parallelen Schienen zwischen der Basis 44 und dem Drehgestell 30 in einer vorteilhaften Weiterbildung vorgesehen. Auf dieser Querführung 46 kann das gesamte Drehgestell 30 quer zur Prüflinie 24 und quer zur Drehachse 38 verschoben werden. Dadurch kann die Drehung des Drehgestells 30 in einer Position der Querführung 46 erfolgen, in der das Drehgestell 30 die größte Entfernung von der Prüflinie 24 hat. Auf diese Weise muß nicht der für die Drehbewegung notwendige Platz in der Prüflinie 24 vorgesehen werden.

In der gezeigten Ausführung wird das Drehgestell 30 um 180° per Hand gedreht, hierfür ist ein Antriebsrad 48 vorgesehen.

## Patentansprüche

1. Ultraschall-Prüfvorrichtung für längliche Prüfstücke (20) mit über der Länge konstantem Querschnitt, insbesondere Rohre und Stangen, die entlang einer Prüflinie (24) in ihrer Längsrichtung transpor tiert werden und dabei eine Prüfmaschine (28) durchlaufen, die auf der Prüflinie (24) angeordnet ist, dadurch gekennzeichnet, daß eine zweite Prüfmaschine (34) vorgese hen ist, daß die beiden Prüfmaschinen (28, 34) auf einem Drehge stell (30) im Abstand voneinander, parallel zueinander und um 180° verdreht gegeneinander angeordnet sind, das um mindestens 180° um eine Drehachse (38) verdrehbar ist, die rechtwinklig zur Prüflinie (24) und im Abstand von dieser verläuft, so daß in einer ersten Drehposition des Drehgestells (30) die eine Prüfmaschine (28) in der Prüflinie (24) liegt und die andere Prüfmaschine (34) umgerü stet werden kann und in der zweiten Drehposition die andere Prüf maschine (34) in der Prüflinie (24) liegt und die erste Prüfmaschi ne (28) umgerüstet werden kann.

2. Ultraschall-Prüfvorrichtung nach Anspruch 1, dadurch gekennzeichnet, daß die Prüfstücke (20) horizontal transportiert werden und die Drehachse (38) vertikal verläuft.

3. Ultraschall-Prüfvorrichtung nach Anspruch 1 oder 2, dadurch gekennzeichnet, daß auf dem Drehgestell (30) nur die Prüfmechaniken (26, 32) der Prüfmaschinen (28, 34) angeordnet sind und eine für beide Prüfmechaniken (26, 32) gemeinsame Elektronik oder die Elektroniken der beiden Prüfmaschinen (28, 34) neben dem Drehgestell (30) angeordnet sind.

4. Ultraschall-Prüfvorrichtung nach einem der Ansprüche 1 bis 3, dadurch gekennzeichnet, daß der Prüfmaschine (z. B. 28), die sich in der Umrüstposition befindet, ein Manipulator (40) für die Einstellung zugeordnet ist.

5. Ultraschall-Prüfvorrichtung nach einem der Ansprüche 1 bis 4, dadurch gekennzeichnet, daß die Prüfmechaniken (26, 32) höhenverstellbar auf dem Drehgestell (30) angeordnet sind.

6. Ultraschall-Prüfvorrichtung nach einem der Ansprüche 1 bis 5, dadurch gekennzeichnet, daß die Prüfmechaniken (26, 32) mit dem Drehgestell (30) jeweils über eine Querführung verschiebbar verbunden sind, deren Verschieberichtung quer zur Prüflinie (24) und quer zur Drehachse (38) verläuft und die es gestattet, jede Prüfmechanik (26 bzw. 32) quer zur Prüflinie (24) zwischen einer eingezogenen Position und einer ausgezogenen Position der Querführung, in der die Prüfmechanik (26 bzw. 32) in der Prüflinie (24) liegt, zu verschieben.

7. Ultraschall-Prüfvorrichtung nach einem der Ansprüche 1 bis 6, dadurch gekennzeichnet, daß das Drehgestell (30) höhenverstellbar ist.

8. Ultraschall-Prüfvorrichtung nach einem der Ansprüche 1 bis 7, dadurch gekennzeichnet, daß das Drehgestell (30) eine Fixierung der Endlagen der Drehung aufweist.

9. Ultraschall-Prüfvorrichtung nach einem der Ansprüche 1 bis 8, dadurch gekennzeichnet, daß das Drehgestell (30) auf einer Querfüh rung verschiebbar angeordnet ist, die quer zur Prüflinie (24) und quer zur Drehachse (38) verläuft und die es gestattet, das Drehge stell (30) quer zur Prüflinie (24) zu verschieben.
